# EUROPÄISCHE PATENTANMELDUNG

(11) **EP 3 650 969 A1**
(43) Veröffentlichungstag der Anmeldung: **13.05.2020**
(21) Anmeldenummer: 18204931.2
(22) Anmeldetag: 07.11.2018
(51) Int. Cl.: G05B 19/4093

(54) **SYSTEM UND VERFAHREN ZUR AUSLIEFERUNG VON PROZEDURALEM WISSEN FÜR DEN AUTONOMEN EINSATZ VON WERKZEUGEN**

(71) Anmelder: Siemens Aktiengesellschaft, 80333 München (DE)
(72) Erfinder: Albrecht, Sebastian, 85399 Hallbergmoos (DE); Dietrich, Vincent, 80639 München (DE); Feiten, Wendelin, 85579 Neubiberg (DE); Kast, Bernd, 89335 Ichenhausen (DE)

(57) **Zusammenfassung**

Die Erfindung betrifft ein Werkzeugsystem (200) für ein Werkzeug (100) mit maschinenlesbarer Kennung (110), wobei das System (200) dazu ausgebildet ist, dem Werkzeug (100) deklarative Informationen und prozedurale Informationen zuzuordnen, welche automatisiert zur Handhabung des Werkzeugs (100) auslesbar und/oder ausführbar sind.

Die Erfindung betrifft außerdem ein entsprechendes Verfahren.

## Beschreibung

In der Industrie werden verschiedenste Werkzeuge verwendet, die zunehmend automatisiert eingesetzt werden sollen. Die Werkzeuge werden bei Auslieferung in der Regel deklarativ beschrieben, was etwa strukturelle Eigenschaften angeht. Für die tatsächliche Anwendung eines Werkzeugs muss in der Regel beträchtlicher Einstellungs- und Programmieraufwand betrieben werden.

Es ist eine Aufgabe der vorliegenden Erfindung, den automatisierten Einsatz von Werkzeugen zu erleichtern, insbesondere die Einrichtung von Werkzeugen.

Erfindungsgemäß ist ein Werkzeugsystem für ein Werkzeug mit maschinenlesbarer Kennung vorgesehen. Das Werkzeugsystem ordnet dem Werkzeug bevorzugt deklarative Informationen und prozedurale Informationen zu.

Dadurch kann prozedurales Wissen abgebildet und ausgeliefert werden, sodass die Nutzbarkeit eines Werkzeugs eines Herstellers gesteigert sein kann. Ein manueller Aufwand für die Anwendung eines Werkzeugs kann reduziert und sogar vollständig eliminiert werden. Ein Werkzeugsystem muss lediglich mit einem neuen Werkzeug ausgestattet werden und kann dieses direkt und selbstständig in geeigneter Art und Weise verwenden. Eine Offline-Simulation oder Bewertung eines Werkzeugs kann durch die systematische Bereitstellung von prozeduralem Wissen vereinfacht werden. Prozedurales Wissen kann vom Nutzer zum Hersteller zurückgeführt werden und der Verbesserung des prozeduralen Wissens des Werkzeugs dienen.

Das Werkzeug kann einem vorbestimmten Zweck dienen, beispielsweise dem Lösen oder Anziehen einer Schraube, dem Bohren eines Lochs, dem Fräsen einer Kante oder dem Herstellen einer Schweißnaht. Das Werkzeugsystem kann einen Bearbeitungsroboter, eine Fertigungsstation, eine Fertigungsstraße oder eine andere bevorzugt automatisierbare Vorrichtung zur Bearbeitung eines Werkstücks umfassen.

Die prozeduralen und/oder deklarativen Informationen sind automatisiert zur Handhabung des Werkzeugs auslesbar und/oder ausführbar, etwa durch das Werkzeugsystem und/oder durch ein damit verbundenes Werkzeugsystem und/oder durch das Werkzeug. Somit wird der Automatisierungsgrad von Werkzeugen erhöht und insbesondere die Einrichtung eines Werkzeugs wird erleichtert.

Eine prozedurale Information betrifft einen Prozess, eine Bewegung oder einen Ablauf, der mittels des Werkzeugs durchgeführt werden kann. Beispielsweise kann zu einem Schraubendreher angegeben sein, wie ein Anzugs- oder Lösevorgang einer Schraube auszuführen ist, oder wie mittels des Schraubendrehers ein Objekt gegriffen oder anderweitig manipuliert werden kann.

Die prozeduralen Informationen können einen oder mehrere Algorithmen umfassen, insbesondere konfigurierbare Algorithmen. Ein Algorithmen können durch einen Anwender und/oder das Werkzeugsystem konfigurierbar sein, etwa um bestimmte Betriebsparameter für den spezifischen Einsatz des Werkzeugs festzulegen. Es ist vorstellbar, dass prozedurale Informationen Implementierungen von ausführbaren Programmen umfassen. Die prozeduralen Informationen können auch ein Simulationsmodell umfassen, das einem Algorithmus oder Programm zugeordnet sein kann. Das Simulationsmodell kann dazu eingerichtet sein, einen Einsatz des Werkzeugs zu planen oder zu simulieren, beispielsweise um Abhängigkeiten zwischen verschiedenen Werkzeugen bei einem Arbeitsablauf zu untersuchen.

Eine beispielhafte prozedurale Information umfasst eine Beschreibung, wie eine vorbestimmte Fähigkeit wie das Lokalisieren eines Werkzeugs, das Greifen des Werkzeugs oder das Verwenden des Werkzeugs, um eine Schraube anzuziehen, durch das Werkzeugsystem durchgeführt werden kann. Eine Fähigkeit kann dabei Ressourcen mit einbeziehen, die nicht mit dem Werkzeug ausgeliefert werden, wie beispielsweise ein Kamerabild, die Beschreibung eines Greifers oder ein Third-party Algorithmus oder eine Bibliothek.

Eine deklarative Information betrifft bevorzugt eine Beschreibung des Werkzeugs. Beispielsweise können im Fall eines Bohrers ein Durchmesser, die Form einer Schneide, ein bearbeitbares Material, ein bevorzugtes Koordinatensystem Minimal- und/oder Maximalwerte für eine bevorzugte Drehzahl angegeben sein. Außerdem können eine Struktur oder eine Information beschrieben sein, die als Eingabe oder Ausgabe für eine prozedurale Information erforderlich sein kann. Umfasst die prozedurale Information ein Programm, so kann beispielsweise ein Aufruf- oder Ausgabeparameter des Programms als deklarative Information beschrieben sein.

Es kann vorgesehen sein, dass die deklarativen Informationen strukturelle Eigenschaften des Werkzeugs beschreiben. Diese können Grundlage für den Einsatz des Werkzeuges sein, und etwa Steuer- oder Regelbereiche und/oder Statik und/oder Belastbarkeit und/oder Geometrie und/oder Koordinatensysteme und/oder Parameterbereiche beschreiben.

Die prozeduralen Informationen zusammen mit den formalen Informationen des deklarativen Wissens gehen bevorzugt über eine reine Benutzerschnittstelle eines Programms zur Verwendung des Werkzeugs hinaus. Die Informationen können gemeinsam beschreiben, was das Werkzeug "macht" - es ist spezifiziert, welche Parameter mit welchen Bedeutungen benötigt werden. Insbesondere im Zusammenhang mit einem Simulationsmodell kann das Verhalten des Werkzeugs in Abhängigkeit vom Abstraktionsgrad der Simulation verbessert und automatisch in ein Gesamtsystem integriert werden.

In manchen Varianten können die prozeduralen Informationen Fähigkeiten des Werkzeugs repräsentieren. Eine Fähigkeit kann dabei eine bestimmte Operation beschreiben, die das Werkzeug auszuführen vermag, etwa eine Bewegungsart, eine Schrauboperation, oder Schneidoperation, oder Greifoperation, usw. Die Fähigkeit kann durch ein Programmmodul und/oder eine Routine beschreibbar sein. Prozedurale Informationen können Funktionalität des Werkzeugs beschreiben, etwa auf Bedeutungsebene. Beispielsweise kann beschrieben sein, was das Werkzeug auszuführen vermag. Allgemein können prozedurale Informationen in einer lesbaren prozeduralen Sprache implementiert sein, die oberhalb der maschinenlesebaren Ebene angesiedelt ist.

Allgemein können deklarative Informationen und/oder prozedurale Informationen durch ein Cloud-System oder Webbasiertem Dienst bereitstellbar sein. Das Werkzeugsystem kann mit einer entsprechenden Schnittstelle zum Zugriff auf das Werkzeugsystem und/oder den Dienst ausgestattet sein, oder als Teil des Cloud-Systems und/oder den Dienst bereitstellenden Systems ausgebildet sein.

Das Werkzeugsystem kann dazu ausgebildet sein, basierend auf einer ausgelesenen Kennung deklarative Informationen und/oder prozedurale Informationen für das Werkzeug anzufordern und/oder bereitzustellen. Das Auslesen kann automatisch erfolgen, wobei das Werkzeugsystem über eine entsprechende Ausleseeinrichtung verfügen kann. Die Kennung kann eine Identität des Werkzeugs und/oder einen Typ des Werkzeugs repräsentieren. Eine Kennung kann beispielsweise optisch und/oder magnetisch und/oder per Funk und/oder per Datensatz erfolgen, der beispielsweise per Funk oder einer Kontaktschnittstelle übertragbar sein kann. Die Kennung kann aktiv übertragbar sein, oder das Werkzeug kann sie passiv bereitstellen, etwa in Form einer Markierung oder eines QR-Codes. Ein Datensatz kann mindestens ein Datum umfassen, etwa eine Identität oder Typenkennung. Das Werkzeugsystem kann insbesondere prozedurale Informationen, welche ausführbar sind, auf dem Werkzeug oder im Werkzeugsystem zur Steuerung des Werkzeugs installieren und/oder ausführen.

Das Werkzeugsystem kann das Werkzeug umfassen, und/oder kann das Werkzeug anzusteuern vermögen. Somit können Werkzeug und Werkzeugsystem separat oder gemeinsam bereitgestellt werden.

Es kann vorgesehen sein, dass das Werkzeug einen Speicher aufweist, welcher deklarative Informationen und/oder prozedurale Informationen umfasst oder speichert. Das ermöglicht es, das Werkzeug mit vorinstallierten Informationen auszuliefern, und/oder autonom zu betreiben.

Die prozeduralen Informationen können insbesondere einen oder mehrere Steuerungsalgorithmen für das Werkzeug umfassen. Ein Steuerungsalgorithmus kann ein Regelungsalgorithmus sein. Ein Algorithmus kann beispielsweise die Steuerung oder Regelung ermöglichen, etwa durch ein autonomes (Teil-)System. Zum Beispiel kann eine Steuerung eines Kraftrückkoppelungs-Reglers eines Schraubwerkzeugs vorgesehen sein.

Alternativ oder zusätzlich können die prozeduralen Informationen einen oder mehrere Lokalisierungsalgorithmen für das Werkzeug umfassen. Ein Lokalisierungsalgorithmus kann die Ortbestimmung und/oder Lagebestimmung des Werkzeugs ermöglichen, etwa basierend auf Sensordaten, die von Sensoren des Werkzeugs selbst und/oder von externen Sensoren stammen können. Externe Sensoren können Teil des Werkzeugsystems sein, oder zur Datenübertragung mit diesem verbunden oder verbindbar sein. Ein solcher Algorithmus kann auf das Werkzeug und/oder seine Umgebung angepasst sein, etwa als, eventuell vortrainiertes, neuronales Netzwerk. Ein Lokalisierungsalgorithmus kann in einigen Beispielen basierend auf Punktwolken und/oder optischen Daten operieren.

Alternativ oder zusätzlich können die prozeduralen Informationen einen oder mehrere Greifplanungsalgorithmen für das Werkzeug umfassen. Derartige Algorithmen können Greifposen und/oder Kräfte und/oder Positionen und/oder Bewegungen steuern.

Weiter alternativ oder zusätzlich können die prozeduralen Informationen einen oder mehrere Qualitätsbewertungsalgorithmen für das Werkzeug umfassen. Ein solcher Algorithmus kann beispielsweise Abnutzung und/oder Ermüdung und/oder Belastung und/oder Wartungsbedarf überwachen und/oder angeben.

Die prozeduralen Informationen können auch einen Simulationsalgorithmus oder ein Simulationsmodell für das Werkzeug umfassen. Mittels des Simulationsmodells kann ein Arbeitsgang mit dem Werkzeug simuliert werden, gegebenenfalls in Kombination mit unterschiedlichen Werkstücken oder weiteren Werkzeugen.

Es ist ferner ein Verfahren zum Betreiben eines Werkzeugsystems beschrieben, wobei das Werkzeugsystem dem Werkzeug nach Auslesen der Kennung prozedurale und/oder deklarative Informationen zuordnet. Das Zuordnen von Informationen kann allgemein das Erhalten und/oder Speichern und/oder Bereitstellen und/oder Installieren und/oder Herunterladen und/oder Aktualisieren von Informationen umfassen. Die Informationen können insbesondere im oder für das Werkzeug oder Werkzeugsystem, oder in einem oder für ein Steuerungssystem für das Werkzeug, bereitgestellt oder installiert werden. Ein Steuerungssystem für das Werkzeug kann allgemein Teil des Werkzeugsystems oder Werkzeugs sein, oder separate davon ausgebildet sein.

Zur Ausführung des Verfahrens kann das Werkzeugsystem eine Verarbeitungseinrichtung umfassen, die dazu eingerichtet sein kann, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Zur Ausführung benötigt ein Computerprogrammprodukt allgemein eine Ausführungsumgebung, die meist eine Verarbeitungseinrichtung, einen ersten Datenspeicher zur Aufnahme des Computerprogrammprodukts, einen zweiten Datenspeicher zur Aufnahme eines Verarbeitungsergebnisses, eine erste Schnittstelle zur Bereitstellung von zu verarbeitenden Informationen und eine zweite Schnittstelle zur Ausgabe von verarbeiteten Informationen umfasst. Die Verarbeitungseinrichtung arbeitet üblicherweise taktgesteuert und umfasst einen passenden Taktgenerator. Die Verarbeitungseinrichtung, die Datenspeicher und die Schnittstellen können jeweils unter Verwendung von Halbleitern realisiert werden. Zur Energieversorgung der Halbleiter kann eine elektrische Energiequelle oder eine Schnittstelle zur Verbindung mit einer elektrischen Energieversorgung bereitgestellt sein. Das Computerprogrammprodukt kann im Rahmen oder unter Zuhilfenahme eines auf der Ausführungsumgebung ablaufenden Verwaltungsprogramms, das auch Betriebssystem genannt werden kann, ablaufen. Vorliegend kann insbesondere das Verarbeitungssystem eine computerbasierte Ausführungsumgebung umfassen bzw. bereitstellen.

Jeder der beschriebenen Algorithmen kann mit interner und/oder externer Sensorik betreibbar sein. Externe Sensorik kann Teil des Werkzeugsystems sein, oder mit diesem verbunden oder verbindbar sein.

Das Werkzeugsystem kann eine oder mehrere Bearbeitungseinrichtungen umfassen. Eine Bearbeitungseinrichtung kann allgemein Bearbeitungslogik, und/oder Bearbeitungsschaltungen, und/oder Speicher aufweisen, welche betreibbar sind, um die Informationen bereitzustellen und/oder auszuführen. Es kann vorgesehen sein, dass die Bearbeitungseinrichtung ein einzelnes System oder ein verteiltes System repräsentiert, etwa einen oder mehrere Computer, und/oder als Cloud-System implementiert ist. Eine Bearbeitungslogik kann eine integrierte Schaltung und/oder eine oder mehrere Prozessoren und/oder Kontroller und/oder ASICs (Application Specific Integrated Circuitry, Anwendungsspezifische integrierte Schaltung) oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM (Random Access Memory) und/oder optischen Speicher und/oder magnetischen Speicher und/oder Flash und/oder NAND (Not AND) Speicher, usw. Es kann allgemein ein Speichermedium vorgesehen sein, welches Instruktionen speichert, die dazu geeignet sind, eine Bearbeitungseinrichtung dazu zu bringen, das hierin beschrieben Verfahren auszuführen. Das Speichermedium kann insbesondere ein nichtflüchtiges und/oder nicht-transitorisches Medium sein. Es ist ein Computerprogramm beschrieben, welches derartige Instruktionen aufweist. Das Computerprogramm kann Module aufweisen, um die Algorithmen auszuführen und/oder auszulesen und/oder die Kennung auszulesen die Informationen bereitzustellen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen jeweils in schematischer Darstellung:
Figur 1 ein beispielhaftes Werkzeugsystem und
Figur 2 ein Ablaufdiagramm eines beispielhaften Verfahrens.

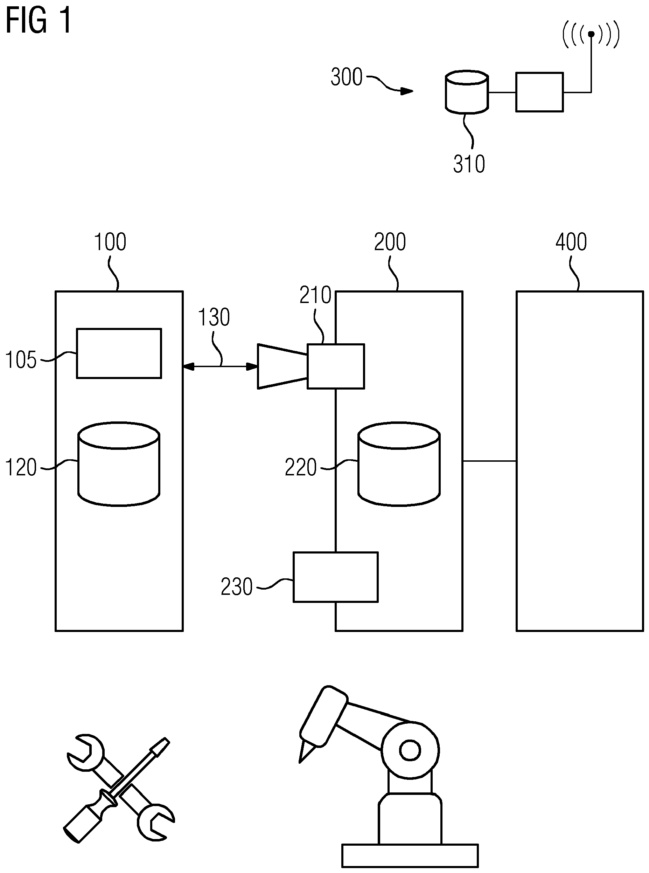

Fig. 1 zeigt beispielhaft ein erfindungsgemäßes Werkzeugsystem 200 mit einem Werkzeug 100. Das Werkzeug 100 kann beispielsweise eine Schraubeinrichtung oder eine Schweißeinrichtung sein, die durch das Werkzeugsystem 200 zur Bearbeitung eines Objekts verwendet werden kann. Dazu kann das Werkzeug 100 üblicherweise durch das Werkzeugsystem 200 automatisiert aus einem Magazin oder von einer vorbestimmten Stelle aufgenommen werden. Das Werkzeugsystem 200 ist bevorzugt dazu eingerichtet, hoch automatisiert oder autonom zu arbeiten.

Das Werkzeug 100 weist eine Kennung 110 auf, die etwa über eine optische Markierung wie einen Text, einen Strichcode oder einen QR-Code, über einen am Werkzeug 100 angebrachten Radiochip, zum Beispiel einen RFID-Chip oder einen Near-Field Chip (NFC), oder über eine bevorzugt drahtlose Datenverbindung, etwa eine IoT (Internet of Things) Verbindung, ausgelesen werden kann.

Das Werkzeugsystem 200 weist eine entsprechende Ausleseeinrichtung 210 auf, welche es vermag, die Kennung 110 auszulesen. Die Ausleseeinrichtung 210 kann beispielsweise eine Radioverbindung bereitstellen, oder eine optische Einrichtung umfassen, die aktiv und/oder passiv sein kann, etwa einen Laser und/oder eine Kamera.

Das Werkzeug 100 kann einen Speicher 120 umfassen, in welchem deklarative und/oder prozedurale Informationen gespeichert oder speicherbar sein können. Es kann vorgesehen sein, dass der Speicher 120 vom Werkzeugsystem 210 über eine geeignete Schnittstelle auslesbar und/oder beschreibbar ist. Informationen können beispielsweise vom Werkzeugsystem 200 in den Speicher 120 eingespielt werden, nachdem das Werkzeug 100 erkannt wurde. Die Informationen können auch bereits vorliegen, bevor das Werkzeugsystem 200 das Werkzeug zum ersten Mal erkennt. Beispielsweise können die Informationen von einem Hersteller des Werkzeugs 100 im Speicher 120 hinterlegt sein.

Das Werkzeugsystem 200 kann einen oder mehrere Speicher 220 für deklarative und/oder prozedurale Informationen umfassen. Deklarative und prozedurale Informationen können zusammen oder getrennt voneinander gespeichert sein. In einigen Fällen können deklarative und prozedurale Informationen über das Werkzeug 100 und das Werkzeugsystem 200 hinweg verteilt gespeichert sein.

Optional ist ein externer Dienst 300 vorgesehen, der insbesondere als insbesondere Web-basierter Server oder Dienst, beispielsweise in einer Cloud, realisiert sein kann. Der externe Dienst 310 kann einen Speicher 310 umfassen, in welchem prozedurale und/oder deklarative Informationen über eines oder mehrere Werkzeuge 100 abgelegt sein können. Die Informationen können beispielsweise durch das Werkzeugsystem 200 abgefragt werden, beispielsweise auf der Basis einer Kennung des Werkzeugs 100.

Es kann vorgesehen sein, dass das Werkzeugsystem 200 dazu ausgebildet ist, ein Werkzeug 100 zu erkennen, etwa durch Auslesen der Kennung 110. Dann kann das Werkzeugsystem 200 auf Informationen, insbesondere prozedurale Informationen, zu dem Werkzeug 100 gemäß Identität oder Typ zugreifen, insbesondere auf Informationen im Speicher 220, oder beim externen Dienst 300 entsprechende Informationen anfragen. In einigen Fällen kann das Werkzeugsystem 200 dazu ausgebildet sein, aufgrund einer Aktualisierungsnachricht vom externen Dienst 300 hin eine Aktualisierung von lokal vorliegenden Informationen vorzunehmen, insbesondere von prozeduralen Informationen. Das Aktualisieren kann das Herunterladen und/oder Speichern und/oder Bereitstellen und/oder Erhalten und/oder Installieren von aktualisierten Informationen umfassen. Die Informationen können im Speicher 220 des Werkzeugsystems 200, im Speicher 110 des Werkzeugs 100 oder in einem externen Speicher, beispielsweise eines Steuerungssystems, abgelegt werden. Das Steuerungssystem kann dazu eingerichtet sein, das Werkzeug zu steuern und/oder zu überwachen und Teil des Werkzeugsystems 200, eine nebengeordnete oder eine übergeordnete Einrichtung sein.

In einem illustrativen Beispiel kann ein Werkzeug 100 mit folgenden prozeduralen Informationen:
- einem Prozessalgorithmus, welcher die Steuerung und Regelung eines automatisierten oder autonomen Werkzeugsystems zur direkten Benutzung eines Werkezugs 100 in einem dafür vorgesehenen Prozess betrifft. Beispielsweise kann ein parametrierter Force-Feedback Regler für einen Schraubprozess mit einem bestimmten Schrauber 100 hinterlegt sein. Dieser Regler kann vom Werkzeugsystem 200 ausgelesen und in einer Anwendung verwendet werden, welche eine Bearbeitung eines Werkstücks mit dem Schrauber 100 umfasst.
- einem Lokalisierungsalgorithmus, der es ermöglichen kann, das Werkzeug 100 auf der Basis von Sensordaten wie beispielsweise monochromen, farbigen oder Graustufen-Bildern oder Punktwolken durch das Werkzeugsystem 200 zu lokalisieren. Ein solcher Algorithmus ist bevorzugt speziell auf das Werkzeug 100 zugeschnitten oder parametrisiert. Ein Lokalisierungsalgorithmus kann ein trainiertes neuronales Netzwerk umfassen.
- einen Greifplanungsalgorithmus, der es ermöglichen kann, für einen beliebigen Greifer eine oder mehrere geeignete Greifposen des Werkzeugsystems 200 relativ zum Werkzeug 100 zu bestimmen. Ein Werkzeug 100 kann beispielsweise empfindliche Teile besitzen oder von seiner mechanischen Struktur einen bestimmten Kraftfluss erfordern.
- ein Qualitätsbewertungsalgorithmus, um die Qualität des Werkzeugs 100 zu quantifizieren. Beispielsweise können auf diese Weise die Maßhaltigkeit eines Bohrers oder die Schärfe eines Fräsers bestimmt werden. Dazu kann ein Sensor des Werkzeugsystems 200 verwendet werden, beispielsweise ein optischer Sensor.

Das Aktualisieren kann insbesondere einen Arbeitsablauf oder eine Fähigkeit betreffen, die von der Kooperation des Werkzeugs 100 mit Sensorik abhängen, etwa wenn das Werkzeugsystem 200 über einen Sensor verfügt, der dazu eingerichtet ist, einen Messwert zu bestimmen, in Abhängigkeit dessen das Werkzeug 100 gesteuert werden kann. Beispielsweise kann der Sensor einen Positionssensor für ein zu bearbeitendes Objekt oder für das Werkzeug 100 umfassen, wenn es vom Werkzeugsystem 200 bewegt wird.

Das Werkzeugsystem 200 kann allgemein zur Verwendung einer Vielzahl Werkzeuge 100 ausgebildet sein, insbesondere unterschiedlichen Werkzeugen 100. Basierend auf der Kennung 110 eines Werkzeugs 100 können jedem Werkzeug 100 geeignete Informationen zugeordnet werden.

Es ist vorstellbar, dass das Werkzeugsystem 200 eine Ausgabeeinrichtung 230 umfasst, und/oder daran angeschlossen oder anschließbar ist, etwa über eine geeignete Schnittstelle. Die Ausgabeeinrichtung 230 kann einerseits dazu ausgebildet sein, Informationen anzuzeigen, und andererseits eine Benutzerschnittstelle zur Eingabe und/oder Überprüfung von Informationen bereitstellen. Derartige Informationen können als Teil der prozeduralen Informationen und/oder zur Konfiguration des Werkzeugsystems 200 oder eines Algorithmus dienen.

Allgemein kann das Werkzeugsystem 200 dazu ausgebildet sein, eines oder mehrere Simulationsmodelle für das Werkzeug 100 bereitzustellen. Ein Simulationsmodell kann als Art prozedurale Information aufgefasst werden. Eine Steuerung des Werkzeugs 100 und/oder das Ausführen einer oder mehrerer der beschriebenen Algorithmen kann auf einem Simulationsmodell basieren und/oder das Simulationsmodell berücksichtigen. Insbesondere kann eine Parametrisierung und/oder Konfiguration eines Algorithmus auf dem Simulationsmodell basieren.

Zur Ausführung eines Simulationsmodells kann ein Simulationssystem 400 vorgesehen sein, das dazu eingerichtet ist, eine Fähigkeit oder Tätigkeit des Werkzeugsystems 200 mit einem oder mehreren Werkzeugen 100 zu planen und/oder zu steuern. Insbesondere kann das Simulationssystem 400 auf der Basis zuvor bestimmter deklarativer und/oder prozeduraler Informationen des Werkzeugs 100 etwa in Abhängigkeit eines beabsichtigten Bearbeitungsergebnisses bestimmen, wie ein Algorithmus oder Programm parametrisiert werden soll, welches das Werkzeugsystem 200 steuert. Hierfür erforderliche Informationen kann das Simulationssystem 400 vom Werkzeugsystem 200 oder direkter vom Werkzeug 120 oder dem externen Dienst 300 beziehen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

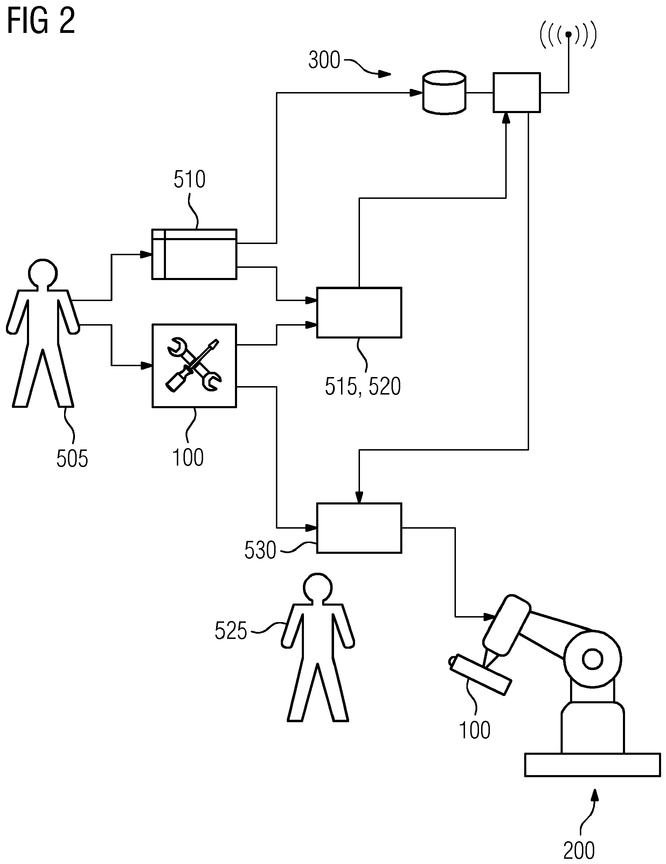

Figur 2 zeigt ein Ablaufdiagramm eines beispielhaften Verfahrens 500, das insbesondere im Zusammenhang mit einem oder mehreren der in Figur 1 gezeigten Elemente durchgeführt werden kann.

Ein Hersteller 505 stellt ein Werkzeug 100 bereit. Mittels eines Modellierungs- oder Simulationsmodells 510 können deklarative Informationen 515 und/oder prozedurale Informationen 520 bestimmt werden, die jeweils auf das Werkzeug 100 bezogen sind. Dazu kann das Simulationsmodell 510 beispielsweise eine graphisch unterstützte Eingabe und/oder Verarbeitung von Informationen unterstützten.

Die Beschreibung des prozeduralen Wissens kann in folgenden vom Modellierungssystem unterstützten Schritten erfolgen:
a. Modellierung eines benannten Operators, dessen Eingangstypen und Ausgangstypen konzeptuell beschrieben werden. Eingangstypen können beispielsweise Bild, oder eine Beschreibung eines Greifers eines Werkzeugsystems 200 sein, das zur Aufnahme des Werkzeugs 100 eingerichtet ist.
   i. Hinterlegen einer geeigneten Implementierung des Operators.
   ii. Automatisches Generieren eines Funktionsskeletts in einer vorbestimmten Programmiersprache und Einfügen der Implementierung.
   iii. insbesondere graphisch unterstützte Wiederverwendung von bereits vorhandenen Operatoren in geeigneter Kombination.

Die mittels des Simulationsmodells 515 bestimmten Informationen können im Speicher 120 des Werkzeugs abgelegt, direkt an ein Werkzeugsystem 200 übermittelt oder im Dienst 300 bereitgestellt werden. Auch das Bereitstellen kann vom Modellierungssystem unterstützt werden.

Ein Nutzer 525 wünscht ein Werkzeug 100 und kann den webbasierten Dienst 300 zum Zugriff auf das Werkzeugwissen zur vorab Evaluation und Simulation nutzen. Dazu kann der Nutzer 525 insbesondere die im externen Dienst 300 bereitgestellten Informationen herunterladen und verarbeiten.

Entscheidet sich der Nutzer 525 für die Verwendung des Werkzeugs 100, so kann er dieses akquirieren und einem automatischen / autonomen Werkzeugsystem 200 oder Automatisierungssystem (AS) zur Verfügung stellen. Das Werkzeugsystem 200 wird bevorzugt über das Vorhandensein des Werkzeuges 100 in Kenntnis gesetzt, und zwar entweder direkt, indem das Werkzeug 100 digital in eine Weltrepräsentation des Werkzeugsystems 200 AS hinzugefügt wird, oder indirekt, indem das Werkzeug 100 physisch in einen Arbeitsraum des Werkzeugsystems 200 eingeführt wird, wo es durch das Werkzeugsystem 200 mittels eines geeigneten Verfahrens identifiziert werden kann.

Das Werkzeugsystem 200 kann dann das für die Verwendung des Werkzeugs 100 vorhandene deklarative und/oder prozedurale Wissen beispielsweise über die Schnittstelle 130 einlesen. Die eingelesenen Informationen können autonom in seinen Ausführungsprozess, der beispielsweise mithilfe eines Ausführungsplanungssystems 530 gesteuert werde kann, integriert werden. Das Integrieren erfolgt bevorzugt ohne Eingriff einer Person.

Der Hersteller 505 kann - sofern derart konfiguriert - Anfragen des Werkzeugsystems 200, des Ausführungsplanungssystems 530 oder des Nutzers 525 an die webbasierte Schnittstelle des Diensts 300 speichern und damit sein bestehendes prozedurales Wissen verfeinern. Beispielsweise kann er ein neuronales Netzwerk zur Lokalisierung des Werkzeugs 100 mit Daten von verschiedenen Nutzer 525 nachtrainieren.

Der Nutzer 525 kann eigenes, während der Verwendung des Werkzeugs 100 erworbenes prozedurales Wissen beispielsweise über das webbasierte Interface des Diensts 300 bereitstellen.

## Patentansprüche

1. Werkzeugsystem (200) für ein Werkzeug (100) mit maschinenlesbarer Kennung (110), wobei das Werkzeugsystem (200) dazu ausgebildet ist, dem Werkzeug (100) deklarative Informationen (515) und prozedurale Informationen (520) zuzuordnen, welche automatisiert zur Handhabung des Werkzeugs (100) auslesbar und/oder ausführbar sind.

2. Werkzeugsystem (200) nach Anspruch 1, wobei die prozeduralen Informationen (520) Algorithmen, insbesondere konfigurierbare Algorithmen umfassen.

3. Werkzeugsystem (200) nach Anspruch 1 oder 2, wobei die deklarativen Informationen (515) strukturelle Eigenschaften des Werkzeugs (100) beschreiben.

4. Werkzeugsystem (200) nach einem der vorangehenden Ansprüche, wobei die prozeduralen Informationen (520) Fähigkeiten des Werkzeugs (100) repräsentieren.

5. Werkzeugsystem (200) nach einem der vorangehenden Ansprüche, wobei deklarative Informationen (515) und/oder prozedurale Informationen (520) durch ein Cloud-System oder einen Web-basierte Dienst (300) bereitstellbar sind.

6. Werkzeugsystem (200) nach einem der vorangehenden Ansprüche, wobei das Werkzeugsystem (200) dazu ausgebildet ist, basierend auf Auslesen der Kennung (110) deklarative Informationen (515) und/oder prozedurale Informationen (520) für das Werkzeug (100) anzufordern und/oder bereitzustellen.

7. Werkzeugsystem (200) nach einem der vorangehenden Ansprüche, wobei das Werkzeugsystem (200) das Werkzeug (100) umfasst und/oder anzusteuern vermag.

8. Werkzeugsystem (200) nach einem der vorangehenden Ansprüche, wobei das Werkzeug (100) einen Speicher (120) aufweist, welcher deklarative Informationen (515) und/oder prozedurale Informationen (520) umfasst.

9. Werkzeugsystem (200) nach einem der vorangehenden Ansprüche, wobei die prozeduralen Informationen (520) einen oder mehrere Steuerungsalgorithmen für das Werkzeug (100) umfassen.

10. Werkzeugsystem (200) nach einem der vorangehenden Ansprüche, wobei die prozeduralen Informationen (520) einen oder mehrere Lokalisierungsalgorithmen für das Werkzeug (100) umfassen.

11. Werkzeugsystem (200) nach einem der vorangehenden Ansprüche, wobei die prozeduralen Informationen (520) einen oder mehrere Greifplanungsalgorithmen für das Werkzeug (100) umfassen.

12. Werkzeugsystem (200) nach einem der vorangehenden Ansprüche, wobei die prozeduralen Informationen (520) einen oder mehrere Qualitätsbewertungsalgorithmen für das Werkzeug (100) umfassen.

13. Werkzeugsystem (200) nach einem der vorangehenden Ansprüche, wobei die prozeduralen Informationen (520) einen Simulationsalgorithmus für das Werkzeug (100) umfassen.

14. Verfahren (500) zum Betreiben eines Werkzeugsystems (200) nach einem Verfahren der Ansprüche 1 bis 13, wobei das Werkzeugsystem (200) dem Werkzeug (100) nach Auslesen der Kennung (110) prozedurale und/oder deklarative Informationen (515, 520) zuordnet.
